# EUROPÄISCHE PATENTANMELDUNG

(11) **EP 2 169 205 A2**
(43) Veröffentlichungstag der Anmeldung: **31.03.2010**
(21) Anmeldenummer: 09012020.5
(22) Anmeldetag: 22.09.2009
(51) Int. Cl.: F02M 25/07

(54) **Verfahren zum Betreiben eines Verbrennungsmotors**

(30) Priorität: 25.09.2008 DE 102008048973
(71) Anmelder: Benteler Automobiltechnik GmbH, 33104 Paderborn (DE)
(72) Erfinder: Rabe, Frank, 32120 Hiddenhausen (DE); Richter, Björn, 33106 Paderborn (DE); Niesse, Max, 33098 Paderborn (DE)
(74) Vertreter: Griepenstroh, Jörg

(57) **Zusammenfassung**

Die Erfindung betrifft ein Verfahren zum Betreiben eines Verbrennungsmotors (1), der eine Frischluftleitung (2), eine Abgasleitung (3) oder ein Abgasrückführsystem (8) aufweist, wobei die Abgase in einer Abgasrückführleitung (9) abgezweigt und der Frischluftleitung (2) zugeführt werden.

Um ein staudruckfreies Abgasrückführsystem (8) zur Verfügung zu stellen, ist ein Gasstromteiler (14; 17) vorgesehen, welcher eine Gesamtquerschnittsfläche aufweist, welche vorzugsweise zumindest dem lichten Durchmesser der Abgasleitung (3) entspricht, wobei ein Abgasvolumenstrom mittels zumindest eines Stellelements (14;18,19) so regelbar ist, dass der Abgasvolumenstrom zum einen in die Abgasrückführleitung (9) strömend und zum anderen in die weiterführende Abgasleitung (3a) strömend aufteilbar ist, ohne den Gegendruck zu erhöhen.

## Beschreibung

Die Erfindung betrifft ein Verfahren zum Betreiben eines Verbrennungsmotors mit den Merkmalen im Oberbegriff des Patentanspruchs 1.

Derartige Verbrennungsmotoren sind zum Beispiel als Ottomotoren oder Dieselmotoren bekannt, bei denen ein Anteil des Abgases der Frischluftleitung über die Abgasrückführleitung erneut zugeführt wird, um die Sauerstoffkonzentration zu reduzieren, was sich vorteilhaft auf eine Verringerung von Stickoxidanteilen in den Abgasen auswirkt. Verbrennungsmotoren können aufgeladen sein, also zum Beispiel einen Turbolader, bestehend aus einem in der Frischluftleitung angeordneten Verdichter und einer in der Abgasleitung angeordneten Turbine, aufweisen. Je nach dem an welchem Ort die Abgasrückführleitung aus der Abgasleitung abzweigt, wird auch von einer Niederdruck-Abgasrückführung (ND-AGR) oder von einer Hochdruck-Abgastückführung (HD-AGR) gesprochen. Bei Niederdrucksystemen werden die Abgase stromabwärts des Turboladers, also stromabwärts der Turbine entnommen und stromaufwärts des Verdichters der Frischluftleitung zugeführt. Wegen des geringen Druckgefälles nach der Turbine ist es bei derzeit bekannten Systemen notwendig, eine Abgasklappe einzusetzen, welche einen Staudruck in der Abgasanlage bewirkt, so dass durch die Druckdifferenz eine erforderliche Abgasrückführrate zu der Frischluftleitung erreicht werden kann.

Die DE 10 2005 048 911 A1 zum Beispiel beschreibt eine solches Niederdruck Abgasrückführsystem, bei welchem stromabwärts der Entnahmestelle, also dem Abzweig der Abgasrückführleitung, in der Abgasleitung ein Abgasgegendruckventil angeordnet ist, durch welches der Abgasgegendruck in der Abgasleitung eingestellt werden kann.

Auch die DE 10 2005 056 955 A1 offenbart, dass bei einem Niederdrucksystem der Druck des Abgases nach der Turbine im Vergleich zum Druck vor der Turbine reduziert ist, weswegen die Rückführrate entsprechend beschränkt ist. Um höhere Rückführraten zu erzielen ist daher zusätzlich eine Abgasklappe im Abgasstrangs stromab des Abzweigs der Abgasrückführleitung vorgesehen, welche einen Strömungsquerschnitt des Abgasstrangs wahlweise verengt, um einen Druck des Abgases im Bereich der Abzweigung der Abgasrückführlekung von dem Abgasstrang zu erhöhen.

Ebenso offenbaren die DE 10 2006 038 706 A1 und die DE 10 2006 054 043 A1 Niederdrucksysteme, bei welchen ein Abgasstaudruck mittels einer Abgasklappe erzeugt wird.

Im derzeit bekannten Stand der Technik werden die Abgase demnach mittels einer entsprechenden Abgasklappe aufgestaut, wodurch sich ein entsprechender Gegendruck (Staudruck) aufbaut, der die Abgasmenge für die erforderliche Abgasrückführrate in die Frischluftleitung drückt. Gegen diesen Staudruck muss der Verbrennungsmotor anarbeiten, wodurch sich eine geringere Motorleistung einstellt. Um die erforderliche bzw. gewünschte Leistung bereitzustellen, muss der Verbrennungsmotor daher mit mehr Brennstoff versorgt werden. Dies wirkt sich nicht nur besonders nachteilig auf einen erhöhten Brennstoffverbrauch aus, sondern auch auf eine erhöhte Emission von Kohlendioxid. Weiter ergeben sich betriebspunktabhängige Gegendrücke aufgrund sich ändernder Klappenstellungen, weiche in einer Motorsteuerung durch entsprechende Kennlinien zu hinterlegen sind, weswegen der Verbrennungsmotor oder zumindest seine Motorelektronik dem AGR-System angepasst werden muss.

Der Erfindung liegt daher ausgehend vom Stand der Technik die Aufgabe zu Grunde, ein Verfahren zum Betreiben eines Verbrennungsmotors aufzuzeigen, mit welchem es möglich ist, den Brennstoffverbrauch weiter zu reduzieren.

Erfindungsgemäß wird die Aufgabe durch ein Verfahren mit den Merkmalen des Anspruchs 1 gelöst.

Die in den Unteransprüchen angegebenen Maßnahmen betreffen vorteilhafte Weiterbildungen des Verfahrens.

Bei dem erfindungsgemäßen Verfahren zum Betreiben eines Verbrennungsmotors ist vorgesehen, dass der Verbrennungsmotor neben einer Frischluftleitung eine Abgasleitung und ein Abgasrückführsystem aufweist. Die Abgase werden in einer Abgasrückführleitung abgezweigt und der Frischluftleitung zugeführt. Ein Gasstromteiler ist vorgesehen, durch welchen ein Abgasvolumenstrom mittels zumindest eines Stellelements des Gasstromteilers so regelbar ist, dass der Abgasvolumenstrom zum einen in die Abgasrückführleitung strömend und zum anderen in die weiterführende Abgasleitung strömend aufgeteilt wird. Wesentlich ist, dass das Abgasrückführsystem mit dem Gasstromteiler im Wesentlichen staudruckfrei betrieben wird. Das bedeutet, dass durch den Gasstromteiler der Staudruck nicht erhöht werden soll.

Im Wesentlichen staudruckfrei bedeutet nicht, dass der Druck des Abgasstroms auf den Atmosphärendruck abfällt. Bei Abgas führenden Systemen ergeben sich immer Verluste durch Rohrreibung, aber auch durch Drosselverluste, wie sie bei Rohrverjüngungen, Engstellen oder strömungstechnischen Einbauten entstehen. Druckmindemd bzw. staudruckerzeugend wirken sich auch Filter, Katalysatoren, Schalldämpfer, Krümmer, Bögen und generell alle Hindernisse im Strömungsweg des Abgases aus. Kempunkt der Erfindung ist nicht, staudruckerzeugende Einbauten generell zu vermeiden, was praktisch nicht möglich ist, sondern vielmehr, den Gasstromteiler des AGR-Systems so anzusteuern und auszulegen, dass durch das Abgasrückführsystem im Wesentlichen kein zusätzlicher Staudruck aufgebaut wird. Anstelle eines Staudrucks ist in der Literatur auch von einem aufgebauten Gegendruck die Rede. Diesen Gegendruck gilt es im Bereich des Gasstromteilers zu minimieren.

Vorteilhaft wurde somit ein Abgasrückführsystem gefunden, welches dem Verbrennungsmotor keinen zusätzlichen Abgasstaudruck entgegen stellt, da der Abgasvolumenstrom geregelt bzw. aufgeteilt wird, wobei der Abgasdruck konstant gehalten wird.

Prinzipbedingt ist das erfindungsgemäße Abgasrückführsystem vor allem bei nichtaufgeladenen Verbrennungsmotoren einzusetzen. In bevorzugter Ausgestaltung weist der Verbrennungsmotor jedoch wenigstens einen Turbolader auf, dessen Verdichter in der Frischluftleitung und dessen Turbine in der Abgasleitung angeordnet ist. In weiter bevorzugter Ausgestaltung ist das Abgasrückführsystem als Niederdrucksystem vorgesehen, welches Abgase stromabwärts der Turbine aus der Abgasleitung entnimmt, und der Frischluftleitung stromaufwärts des Verdichters zuführt. Natürlich können aber auch durch Druckwellenlader aufgeladene Verbrennungsmotoren entsprechend ausgeführt werden.

Günstig im Sinn der Erfindung ist es, wenn in der Abgasleitung stromaufwärts des Gasstromteilers bzw. stromabwärts der Turbine ein Drucksensor angeordnet ist. Der Drucksensor ermittelt den tatsächlichen Abgasdruck in der Abgasleitung bzw. stromabwärts der Turbine. Ermittelt der Drucksensor einen Abgasdruck, welcher von einem vorgegebenen Sollwert abweicht, wird das zumindest eine Stellelement angesteuert, und aus seiner neutralen Lage herausbewegt, um den Abgasdruck konstant zu halten, bzw. um den Solldruckwert wieder zu erreichen. In bevorzugter Ausführung wird ein Solldruckwert gewählt, welcher einem Abgasdruck in einer Abgasleitung entspricht, aus welcher keine Abgase zur Frischluftleitung zurückgeführt werden.

In weiter bevorzugter Ausgestaltung sind der Frischluftleitung Luftmengensensoren zugeordnet, mit denen eine exaktes Mischungsverhältnis von Frischluft und Abgasen und somit die genaue Abgasrückführrate bestimmt werden kann. Die Luftmengensensoren können in einer ersten Ausführung so angeordnet sein, dass ein erster Luftmengensensor stromaufwärts der Einmündung der Abgasrückführleitung in die Frischluftleitung angeordnet ist und eine durch eine möglicherweise angeordnete Drosselklappe strömende Frischluftmenge aufnimmt. Ein zweiter Luftmengensensor kann in der Abgasrückführleitung, bevorzugt nahe bei einer Einmündung derselben in die Frischluftleitung angeordnet sein. Der erste Luftmengensensor bestimmt bei dieser Ausgestaltung direkt die eingesaugte Luftmenge, wobei der zweite Luftmengensensor die rückgeführte Abgasmenge detektiert. Denkbar ist aber auch, den ersten Luftmengensensor stromabwärts der Einmündung der Abgasrückführleitung in die Frischluftleitung anzuordnen, so dass der erste Luftmengensensor dann einen Gesamtvolumenstrom (Frischluftvolumen plus rückgeführte Abgase) detektiert. Somit lässt sich die derzeitige AGR-Rate vollständig erfassen.

Zweckmäßiger Weise wird der Abgasdruck mittels des Drucksensors aufgenommen, wobei vorzugsweise die Luftmengensensoren Steuersignale zur Ansteuerung des Stellelementes generieren. Um die erforderliche Rückführrate (rückgeführte Abgasmenge) entsprechend den Vorgaben des Motormanagements erreichen zu können, kann die Frischluftmenge beispielsweise zusätzlich mittels der in der Frischluftleitung angeordneten Drosselklappe oder dergleichen reduziert werden. Dadurch kann Regeldynammik erhöht werden. Die Ansteuerung der Drosselklappe ist aber nicht zwingend nötig. Da die Rückführrate von der Kurbelwellendrehzahl und dem Drehmoment abhängig ist, ist die Verstellung zumindest eines Stellelementes auch mittels einer geeigneten funktionalen Verknüpfung der beiden Signale regelbar, so dass auf die Sensoren verzichtet werden kann.

Anstelle der Sensoren können somit entsprechende Kennfelder oder ein mathematisches Modell inklusive Beobachter als Signalerzeuger für das zumindest eine Stellelement implementiert werden.

In bevorzugter Ausgestaltung ist vorgesehen, dass Abgase aus der Abgasleitung, bevorzugt den Drucksensor passierend, in den Gasstromteiler einströmen. Von dem Gasstromteiler zweigen zum einen die Abgasrückführleitung und zum anderen die weiterführende Abgasleitung ab. In dem Gasstromteiler ist zumindest ein Stellelement angeordnet. Insofern ist vorteilhaft vorgesehen, dass der Gasstromteiler Abzweige zu der Abgasrückführleitung und zu der weiterführenden Abgasleitung mit einer Gesamtquerschnittsfläche aufweist, die vorzugsweise zumindest dem lichten Durchmesser der Abgasleitung entspricht.

Das Stellelement ist in bevorzugter Ausgestaltung als Klappe ausgeführt, welches in seiner neutralen Position senkrecht zum einströmenden Abgas angestellt ist. Das Stellelement kann aber auch als Schieber oder Kugelventil realisiert werden, um nur einige Beispiele zu nennen. Das Stellelement bewegt sich genau dann, wenn die Abgasrückführrate nicht dem Sollwert der Motorsteuerung entspricht. Dabei ist als Randbedingung vorzugsweise der konstante Standruck einzuhalten.

Alternativ kann vorgesehen sein, den Gasstromteiler mittels zweier Stellelemente zu realisieren, wobei ein Stellelement in der Abgasrückführleitung und ein weiteres Stellelement in der Abgasleitung stromabwärts des Abzweiges der Abgasrückführleitung aus der Abgasleitung angeordnet ist. Beide Stellelemente weisen zweckmäßiger Weise einen Gesamtöffnungsgrad auf, welcher zumindest dem lichten Durchmesser der Abgasleitung entspricht, um einen Staudruckaufbau zu vermeiden. Natürlich sind die Stellelemente dieser alternativen Ausgestaltung entsprechend ansteuerbar und günstigerweise in einem gekapselten System angeordnet.

Folgende Aspekte der Erfindung werden zusammenfassend als besonders vorteilhaft betrachtet:
- Das Abgasrückführsystem ist als Niederdrucksystem ausgeführt;
- Der Abgasdruck wird mittels wenigstens eines Drucksensors bestimmt und unter Betätigung von Stellelementen im Wesentlichen auf einem Wert gehalten, der dem Wert ohne Abgasrückführsystem entspricht;
- Für die Steuerung oder Regelung des Abgasdrucks werden Luftmengensensoren in der Frischluftleitung und der Abgasrückführleitung verwendet, welche die angesaugte und rückgeführte Gasmenge messen;
- Die angesaugte Frischluftmenge wird durch Steuerung einer Drosselklappe reduziert, damit sich eine bestimmte Abgasmenge des rückgeführten Abgasvolumenstroms mit der angesaugten Frischluftmenge in einem vorgegebenen Verhältnis mischt;
- Der Abgasdruck wird durch Betätigung eines Stellelements eingestellt, wobei im Gasstromteiler ein einziges Stellelement angeordnet ist oder alternativ dadurch, dass zwei unabhängig voneinander betätigbare Stellelemente vorgesehen sind, wobei eines der Stellelemente in der Abgasrückführleitung und das weitere Stellelement in einem stromabwärts eines Abzweigs der Abgasrückführleitung in derselben angeordnet ist;
- Der Gasstromteiler weist Abzweige zu der Abgasrückführleitung und der weiterführenden Abgasleitung auf, dessen Abzweige zusammen eine Gesamtquerschnittsfläche aufweisen, die zumindest dem lichten Durchmesser der Abgasleitung entspricht.
   Die Erfindung wird nachfolgend anhand der in den schematischen Zeichnungen dargestellten Ausführungsbeispiele näher erläutert. Es zeigen:
   - Fig. 1: einen Verbrennungsmotor in prinzipieller Ansicht, mit einem Gasstromteiler, und vorgeschaltetem Drucksensor,
   - Fig. 2: den Verbrennungsmotor aus Figur 1 mit einer Kennfeldsteuerung des Stellelementes, und
   - Fig. 3: den Verbrennungsmotor aus Figur 1 mit einem zu Figur 1 alternativen Gasstromteiler.

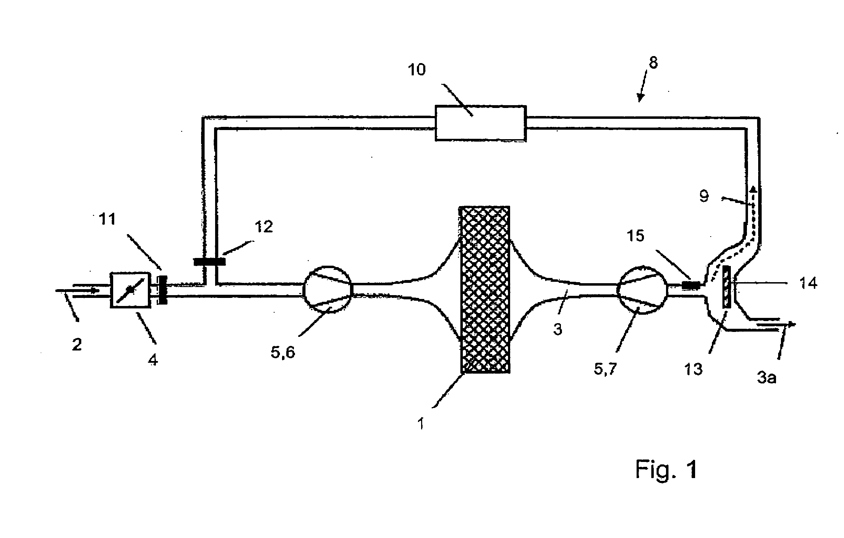

Figur 1 zeigt einen Verbrennungsmotor 1. Der Verbrennungsmotor 1 weist eine Frischluftleitung 2 und eine Abgasleitung 3 auf. In der Frischluftleitung 2 ist eine Drossel 4 angeordnet.

Weiter weist der Verbrennungsmotor 1 einen Turbolader 5 auf, der einen in der Frischluftleitung 2 angeordneten Verdichter 6 und eine in der Abgasleitung 3 angeordnete Turbine 7 hat.

Es ist ein Abgasrückführsystem 8 (AGR) vorgesehen, weiches über eine Abgasrückführleitung 9 Abgase des Verbrennungsmotors 1 aus der Abgasleitung 3 abzweigt und der Frischluftleitung 2 zuführt.

In der Abgasrückführleitung 9 können beispielsweise Komponenten wie ein Wärmetauscher, ein AGR-Bypass, Wastegate oder Kondensatabscheider angeordnet sein, was in den Figuren 1 bis 3 pauschal mit dem Bezugszeichen 10 bezeichnet ist.

Die Abgasrückführleitung 8 zweigt in dem dargestellten Ausführungsbeispiel stromabwärts der Turbine 7 Abgase aus der Abgasleitung 3 ab, und führt diese der Frischluftleitung 2 stromauf des Verdichters 6 zu. Insofern ist in den Figuren 1 bis 3 beispielhaft ein Niederdruck-Abgasrückführsystem dargestellt.

Stromabwärts der Drosselklappe 4 ist in der Frischluftleitung 2 ein erster Luftmengensensor 11 angeordnet, welcher einen Frischluftvolumenstrom detektiert. In der Abgasrückführleitung 9 ist ein zweiter Luftmengensensor 12 nahe bei oder in Strömungsrichtung der Abgase gesehen zumindest vor der Einmündung der Abgasrückführleitung 9 in die Frischluftleitung 2 und hinter den Komponeneten 10 angeordnet. Der zweite Luftmengensensor 12 detektiert einen rückgeführten Abgasvolumenstrom.

Die Abgasleitung 3 mündet in dem Gasstromteiler 13, welcher den einströmenden Abgasvolumenstrom zum einen in die Abgasrückführleitung 9 einströmend und zum anderen in die weiterführende Abgasleitung 3a einströmend aufteilt, ohne dass sich ein zusätzlicher Abgasgegendruck bzw. Staudruck einstellt, gegen den der Verbrennungsmotor anarbeiten müsste.

Der Gasstromteiler 13 ist in dem dargestellten Ausführungsbeispiel nach Figur 1 T-Kopfstegartig ausgeführt und weist ein Stellelement 14 auf. In dem in Figur 1 dargestellten Ausführungsbeispiel ist das Stellelement 14 für eine definierte Rückführrate in seiner neutralen Position angestellt. Das Stellelement 14 kann als Klappe, Schieber oder Kugelventil ausgeführt sein, um nur einige Beispiele zu nennen. Die Abgasrückführleitung 9 und die weiterführende Abgasleitung 3a zweigen jeweils von dem Gasstromteiler 13 ab. Beide Abzweige weisen eine Gesamtquerschnittsfläche auf, welche vorzugsweise zumindest dem lichten Durchmesser der Abgasleitung 3 entspricht. Dadurch wird kein zusätzlicher Staudruck aufgebaut, wobei die in die jeweiligen Abzweige einströmende Abgasmenge jedoch entsprechend dem Verhältnis der Öffnungen aufgeteilt wird. Natürlich ist die geometrische Ausgestaltung des Gasstromteilers hierauf auszulegen, so dass die dargestellte Ausführung auch nur beispielhaft zu verstehen ist.

Über die Luftmengensensoren 11 und 12 kann ein exaktes Mischungsverhältnis und somit die genaue Abgasrückführrate bestimmt werden. Stromabwärts der Turbine 7 ist ein Drucksensor 15 angeordnet, welcher einen tatsächlichen Abgasdruck in der Abgasleitung 3 detektiert. Der Abgasdruck ist bevorzugt auf einem Solldruckwert zu halten, welcher einem Abgasdruck eines Verbrennungsmotors ohne (Niederdruck) Abgasrückführsystem entspricht.

Weicht der tatsächliche Abgasdruck von dem Solldruckwert ab, wird das Stellelement 14 so verstellt, dass der in die beiden Abzweige einströmende Abgasanteil entsprechend aufgeteilt wird. Als Steuergrößen für die Ansteuerung bzw. Regelung des Stellelementes dienen dabei bevorzugt die Signale der Luftmengensensoren 11 und 12. Damit die rückgeführte Abgasmenge entsprechend den dynamischen Vorgaben des Motormanagements eingesogen werden kann, kann die Frischluftmenge vorzugsweise mittels der Drosselklappe 4 verringert werden. Da die rückgeführte Abgasmenge (Abgasrückführrate) von der Kurbelwellendrehzahl und dem Drehmoment abhängig sind, lässt sich die Einstellung der Stellelemente einfach anhand einer funktionalen Verknüpfung dieser Signale steuern.

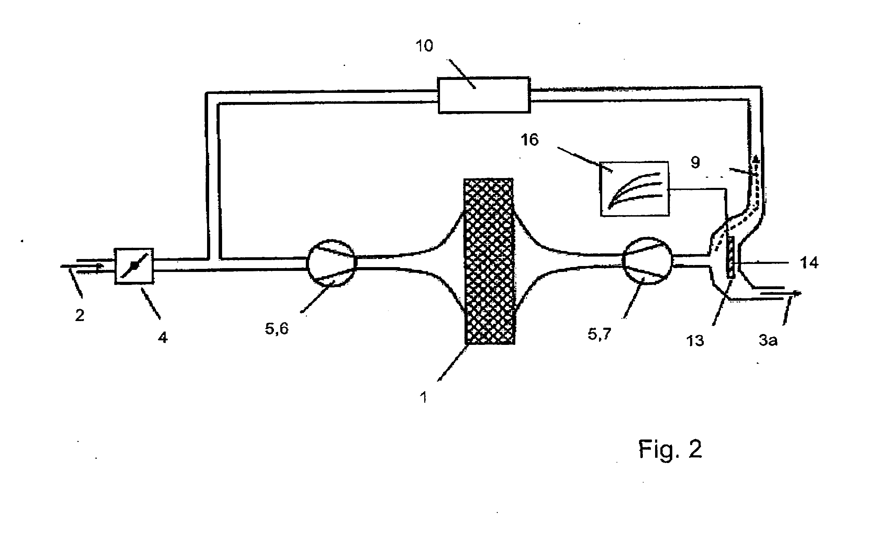

Wie in Figur 2 beispielhaft dargestellt ist, können anstelle der Sensoren 11, 12 und 15 entsprechende Kennfelder oder ein mathematisches Modell inklusive Beobachter für das beispielhafte Stellelement 14 verwendet werden. In Figur 2 ist daher beispielhaft ein Block 16 dargestellt, in welchem entsprechende Programme und eine erforderliche Elektronik abgelegt sind. Ansonsten entspricht das Ausführungsbeispiel der Figur 2 dem des Ausführungsbeispiels nach Figur 1.

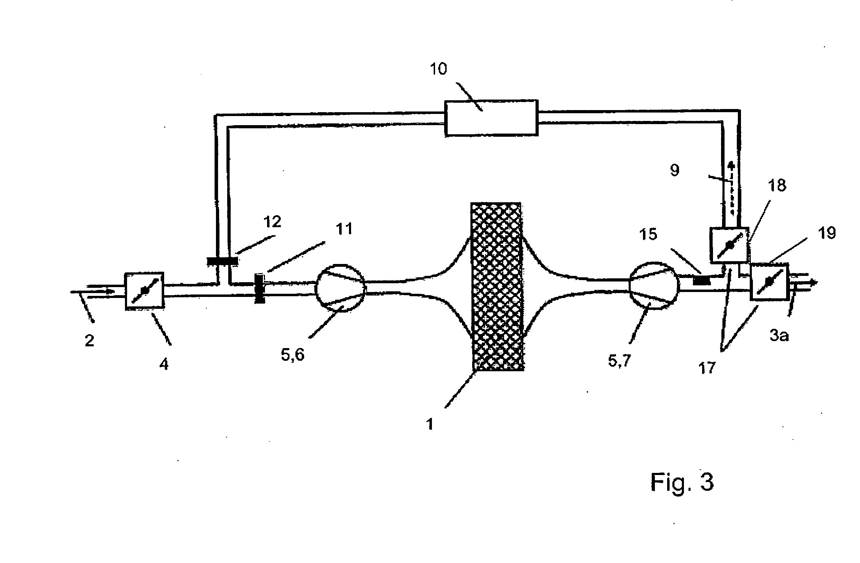

In Figur 3 dagegen ist der erste Luftmengensensor 11 stromabwärts der Einmündung der Abgasrückführleitung 9 in die Frischluftleitung 2 in derselben angeordnet. In diesem Ausführungsbeispiel detektiert der erste Luftmengensensor 11 einen Gesamtvolumenstrom in der Frischluftleitung, welcher sich aus der Frischluftmenge und der rückgeführten Abgasmenge zusammensetzt. Dies kann so auch bei der Ausführung nach Figur 1 vorgesehen sein.

Abweichend zu Figur 1 ist in Figur 3 weiter ein alternatives Gasstromteiler 17 dargestellt, welches ein Stellelement 18 in der Abgasrückführleitung 9 und ein Stellelement 19 in der weiterführenden Abgasleitung 3a aufweist. Die Öffnungsgrade der beiden Stellelemente 18 und 19 weisen eine Gesamtquerschnittsfläche auf, welche vorzugsweise zumindest dem lichten Durchmesser der Abgasleitung 3 entspricht, so dass der Gasstromteiler 17 ebenfalls wie zuvor eine Gesamtquerschnittsfläche aufweist, welche dem lichten Durchmesser der Abgasleitung 3 entspricht. Die Stellelemente 18 und 19 sind entsprechend ansteuerbar und bevorzugt in einem gekapselten System angeordnet.

Insgesamt wird mit der Erfindung ein staudruckfreies Abgasrückführsystem zur Verfügung gestellt, so dass der Verbrennungsmotor nicht auf Grund betriebspunktabhängiger Gegendrücke beeinträchtigt wird oder bei gleicher Leistung nicht mehr Treibstoff verbraucht, womit auch Kohlendioxidemissionen, verglichen mit einem Abgasrückführsystem bei welchem ein Abgasgegendruck zum Aufrechterhalten der Abgasrückführrate erzeugt werden muss, reduziert sind. Bei dem vorgeschlagenen System wird kein Abgasgegendruck erzeugt, da der Abgasvolumenstrom bei konstantem Abgasdruck aufgeteilt wird.

### Bezugszeichen:

- 1: - Verbrennungsmotor
- 2 -: Frischluftleitung
- 3 -: Abgasleitung
- 3a -: weiterführende Abgasleitung
- 4 -: Drosselklappe in 2
- 5 -: Turbolader
- 6 -: Verdichter
- 7 -: Turbine
- 8-: Abgasrückführsystem
- 9 -: Abgasrückführleitung
- 10-: Komponenten in 9
- 11 -: erster Luftmengensensor
- 12-: zweiter Luftmengensensor
- 13-: Gasstromteiler
- 14-: Stellelement in 13
- 15 -: Drucksensor
- 16 -: Block
- 17 -: Gasstromteiler
- 18 -: Stellelement zu 17 in 9
- 19 -: Stellelement zu 17 in 3a

## Patentansprüche

1. Verfahren zum Betreiben eines Verbrennungsmotors, der eine Frischluftleitung (2), eine Abgasleitung (3) und ein Abgasrückführsystem (8) aufweist, wobei Abgase in eine Abgasrückführleitung (9) abgezweigt und der Frischluftleitung (2) zugeführt werden, wobei ein Gasstromteiler (13; 17) vorgesehen ist, durch welchen ein Abgasvolumenstrom mittels zumindest eines Stellelements (14; 18, 19) des Gasstromteilers (13; 17) so regelbar ist, dass der Abgasvolumenstrom zum einen in die Abgasrückführleitung (9) strömend und zum anderen in die weiterführende Abgasleitung (3a) strömend aufgeteilt wird, **dadurch gekennzeichnet, dass** das Abgasrückführsystem mit dem Gasstromteiler (13; 17) im Wesentlichen staudruckfrei betrieben wird.

2. Verfahren nach Anspruch 1, **dadurch gekennzeichnet, dass** das Abgasrückführungssystem (8) als Niederdrucksystem ausgeführt ist.

3. Verfahren nach Anspruch 1 oder 2, **dadurch gekennzeichnet, dass** der Abgasdruck mittels eines Drucksensors (15) bestimmt wird und unter Betätigung von Stellelementen (4; 14; 18,19) im Wesentlichen auf einem Wert gehalten wird, der dem Wert ohne Abgasrückführungssystem (8) entspricht.

4. Verfahren nach einem der Ansprüche 1 bis 3, **dadurch gekennzeichnet, dass** für die Steuerung oder Regelung des Abgasdruckes Luftmengensensoren (11, 12) in der Frischluftleitung (2) und der Abgasrückführleitung (9) verwendet werden, welche die angesaugte und die rückgeführte Gasmenge messen.

5. Verfahren nach einem der Ansprüche 1 bis 4, **dadurch gekennzeichnet, dass** die angesaugte Frischluftmenge durch Steuerung einer Drosselklappe (4) reduziert wird, damit sich eine bestimmte Abgasmenge des rückgeführten Abgasvolumenstroms mit der angesaugten Frischluftmenge in einem vorgegebenen Verhältnis vermischt.

6. Verfahren nach einem der Ansprüche 1 bis 5, **dadurch gekennzeichnet, dass** der Abgasdruck durch Betätigung eines Stellelements (14) eingestellt wird, wobei im Gasstromteiler (13) ein einziges Stellelement (14) angeordnet ist.

7. Verfahren nach einem der Ansprüche 1 bis 5, **dadurch gekennzeichnet, dass** der Abgasdruck durch voneinander unabhängige Betätigung zweier Stellelemente (18, 19) eines Gasstromteilers (17) eingestellt wird, wobei eines der Stellelemente (18) in der Abgasrückführleitung (9) und das weitere Stellelement (19) in einem stromabwärts eines Abzweiges der Abgasrückführleitung (9) in derselben angeordnet ist.
